# EUROPÄISCHE PATENTANMELDUNG

(11) **EP 2 366 592 A1**
(43) Veröffentlichungstag der Anmeldung: **21.09.2011**
(21) Anmeldenummer: 10156544.8
(22) Anmeldetag: 15.03.2010
(51) Int. Cl.: B60R 21/00, B62D 37/00, B62D 49/08, B60P 1/00

(54) **Reversierbare Kippschutzvorrichtung für Fahrzeuge**

(71) Anmelder: ISE Automotive GmbH, 51702 Bergneustadt (DE)
(72) Erfinder: Dr. Hellweg, Hans-Bernd, 53819, Neunkirchen-Seelscheid (DE)
(74) Vertreter: Wenzel & Kalkoff

(57) **Zusammenfassung**

Die Erfindung betrifft Kippschutzvorrichtung für Kraftfahrzeuge, insbesondere Nutzfahrzeuge, mit einem mit dem Kraftfahrzeug verbindbaren, zwischen einer zurückgezogenen, fahrzeugnahen Ruheposition und einer ausgestellten, fahrzeugfernen Stützposition verstellbaren Stützkörper und einer den Stützkörper zwischen der Ruheposition und der Stützposition verlagernden Antriebseinheit. Um eine Kippschutzvorrichtung bereitzustellen, die im Falle eines drohenden Umkippens durch die Verlagerung von Stützkörpern in eine Stützposition ein Umkippen verhindert und nach Wegfall der Gefahr des Umkippens eine Weiternutzung des Kraftfahrzeuges ermöglicht, wobei weiterhin das Kraftfahrzeug gegen Umkippen gesichert ist, ist vorgesehen, dass die Antriebseinheit mittels einer Steuereinheit kontrollierbar ist, die derart ausgebildet ist, dass im Falle eines drohenden Umkippens des Kraftfahrzeuges (1) eine Verlagerung des Stützkörpers (2a - 2e) in Richtung auf die Stützposition und nach Beendigung des Stützvorgangs eine Rückverlagerung des Stützkörpers (2a - 2e) in die Ruheposition bewirkt wird.

## Beschreibung

Die Erfindung betrifft eine Kippschutzvorrichtung für Kraftfahrzeuge, insbesondere Nutzfahrzeuge, mit
- einem mit dem Kraftfahrzeug verbindbaren, zwischen einer zurückgezogenen, fahrzeugnahen Ruheposition und einer ausgestellten, fahrzeugfernen Stützposition verstellbaren Stützkörper und
- einer den Stützkörper zwischen der Ruheposition und der Stützposition verlagernden Antriebseinheit.

Eine Kippschutzvorrichtung der eingangs genannten Art ist bspw. aus der US 5,931,499 bekannt. Die in dieser Druckschrift beschriebene Fahrzeugstabilisierungseinrichtung weist ein Stabilisierungselement auf, welches im Falle eines drohenden Überschlags bzw. Umkippens des Fahrzeugs ausgefahren wird. Aufgrund der Wirkverbindung des Stabilisierungselements mit dem Fahrzeug verhindert der fahrzeugferne Auflagepunkt des Stabilisierungselements wirkungsvoll ein Umkippen des Fahrzeugs.

Obgleich das bekannte System zuverlässig einem Umkippen des Fahrzeugs entgegenwirkt, weist dieses jedoch den Nachteil auf, dass das Stabilisierungselement nach dessen Aktivierung in einer ein Umkippen verhindernden Stützposition verbleibt. Zum ggfs. möglichen weiteren Betrieb des Fahrzeuges ist es zunächst erforderlich, eine ggfs. vorhandene Verriegelung manuell aufzuheben und dann das Stützelement in eine Position zu verstellen, in der eine ungehinderte Weiterfahrt möglich ist. Ein mehrfacher Einsatz des Systems ist nicht vorgesehen.

Der Erfindung liegt die Aufgabe zugrunde, eine Kippschutzvorrichtung der eingangs genannten Art bereitzustellen, die im Falle eines drohenden Umkippens durch die Verlagerung von Stützkörpern in eine Stützposition ein Umkippen verhindert und nach Wegfall der Gefahr des Umkippens eine Weiternutzung des Kraftfahrzeuges ermöglicht, wobei weiterhin das Kraftfahrzeug gegen Umkippen gesichert ist.

Die Erfindung löst die Aufgabe durch eine Kippschutzvorrichtung für Kraftfahrzeuge mit den Merkmalen des Anspruchs 1. Vorteilhafte Weiterbildungen der Erfindung sind in den abhängigen Ansprüchen angegeben.

Kennzeichnend für die erfindungsgemäße Kippschutzvorrichtung ist, dass die Antriebseinheit mittels einer Steuereinheit kontrollierbar ist, die derart ausgebildet ist, dass im Falle eines drohenden Umkippens des Kraftfahrzeuges eine Verlagerung des Stützkörpers in Richtung auf die Stützposition und nach Beendigung des Stützvorgangs eine Rückverlagerung des Stützkörpers in die Ruheposition bewirkt wird. Die Steuereinheit dient dazu, die Bewegungen des Kraftfahrzeuges, bspw. unter Verwendung geeigneter Sensoren, zu erfassen und im Falle eines drohenden Umkippens die Antriebseinheit zu aktivieren. Die Antriebseinheit bewirkt dann eine Verlagerung des Stützkörpers ausgehend von der Ruheposition am Kraftfahrzeug in Richtung auf die Stützposition, in der der Stützkörper aufgrund einer Bereitstellung eines fahrzeugfernen Abstützpunktes ein Umkippen des Kraftfahrzeuges verhindert. Die Antriebseinheit ist dabei dergestalt, dass diese eine beliebig häufige Verstellung des Stützkörpers zwischen der Stützposition und der Ruheposition ermöglicht. Nachdem das Fahrzeug wieder in eine Position gelangt, in der die Gefahr des Umkippens nicht mehr gegeben ist, wird über die Steuereinheit ein entsprechendes Signal an die Antriebseinheit geleitet, wodurch eine Rückverlagerung des Stützkörpers in die Ruheposition erreicht wird. Nach der Rückverlagerung kann das mit der erfindungsgemäßen Kippschutzvorrichtung ausgestattete Kraftfahrzeug in seiner bestimmungsgemäßen Weise fortgenutzt werden. Zur Erfassung der Fahrzeuglage und zum Erkennen einer drohenden Gefahr des Umkippens des Kraftfahrzeugs können geeignete Sensoren verwendet werden, welche mit der Steuereinheit verbunden sind.

Die erfindungsgemäße Kippschutzvorrichtung ermöglicht es, Kraftfahrzeuge aller Art, insbesondere in Verbindung mit Nutzfahrzeuge wie bspw. Baustellenfahrzeuge, welche häufig auf Baustellen in unwegsamen Gelände bewegt werden, zuverlässig gegen ein Umkippen zu sichern, wobei gleichzeitig gewährleistet wird, dass nach Überwindung einer Gefahrensituation das Fahrzeug ohne Einschränkungen weitergenutzt werden kann. Der Stützkörper muss dabei nicht zwangsweise bis zur maximalen Stützposition verlagert werden, um ein Umkippen zu verhindern. In Abhängigkeit von der Geländetopografie, in der sich das Kraftfahrzeug bewegt, kann auch ein teilweises Verlagern des Stützkörpers in Richtung auf die Stützposition bereits ein Umkippen verhindern.

Um die Funktion der Kippschutzvorrichtung zu gewährleisten, ist es erforderlich, während des Abstützens des Fahrzeugs über den Stützkörper eine Verstellung des Stützkörpers in Richtung auf die Ruheposition zu verhindern. Die notwendige Sicherung der Verschiebbarkeit des Stützkörpers in Richtung auf das Kraftfahrzeug kann dabei grundsätzlich in beliebiger Weise, bspw. durch eine entsprechende Ausgestaltung der Antriebseinheit realisiert werden, welche derart ausgestaltet sein kann, dass sie im Zustand eines drohenden Umkippens eine manuelle Rückverlagerung des Stützkörpers in Richtung auf die Ruheposition blockiert. Besonders vorteilhafterweise sind die Antriebseinheiten dabei durch einen elektromotorischen oder hydraulischen Antrieb gebildet. Diese zeichnen sich überdies durch ihren geringen Bauraum sowie hohe Zuverlässigkeit aus und ermöglichen ferner eine schnelle Verlagerung des Stützkörpers in Richtung auf die Stützposition.

Eine Sicherung der Stützposition kann jedoch nach einer weiteren Ausgestaltung der Erfindung alternativ oder zusätzlich auch durch eine vorteilhafterweise vorzusehende mechanische Verriegelungseinheit erfolgen, die die Position des Stützkörpers in der Stützposition sichert. Die Verriegelungseinheit, welche derart ausgestaltet ist, dass sie mechanisch eine Rückverlagerung des Stützkörpers in Richtung der Ruheposition blockiert, sichert in besonders zuverlässiger Weise die Funktion der Kippschutzvorrichtung indem sie wirkungsvoll eine Rückverlagerung des Stützkörpers blockiert. Besonders vorteilhafterweise ist die Verriegelungseinheit darüber hinaus nicht nur zur Sicherung der Stützposition, sondern auch zur lösbaren Arretierung des Stützkörpers in Zwischenpositionen ausgebildet. Zwischenpositionen bilden dabei solche Positionen des Stützkörpers, in denen dieser bereits eine Abstützung gegenüber dem Gelände bewirkt, sich jedoch noch nicht in seiner maximal ausgefahrenen Position, nämlich der Stützposition befindet. Diese Ausgestaltung der Erfindung ermöglicht auch eine mechanische Verriegelung der Stützkörper in den Fällen, in denen eine Abstützung bereits in einer nicht voll ausgefahrenen Position des Stützkörpers erfolgt, wie dies bspw. bei einem Betrieb von Baustellenfahrzeugen auf Baustellen der Fall ist, auf denen das Gelände oftmals nicht eben ist. Die Nutzbarkeit der Kippschutzvorrichtung wird somit in ergänzender Weise gesteigert.

Um einen ungehinderten sowie möglichst verzögerungsfreien Betrieb der mit einer erfindungsgemäßen Kippschutzvorrichtung ausgestatteten Fahrzeuge zu ermöglichen, weist die Verriegelungseinheit nach einer weiteren Ausgestaltung der Erfindung Mittel zur Verstellung zwischen einer Ver- und Entriegelungsstellung auf. Diese Mittel ermöglichen eine besonders schnelle und umgehende Entriegelung der Stützkörper nach einer erfolgten Aktivierung der Kippschutzvorrichtung und Wegfall der Umkippgefahr. Eine Verriegelung kann grundsätzlich in automatischer Weise erfolgen, bspw. durch eine Ausgestaltung des Stützkörpers, die während des Ausstellvorgangs stufenweise eine Rückstellung verhindert. Die Verwendung von Mitteln zur Verstellung zwischen der Ver- und Entriegelungsstellung gemäß dieser Weiterbildung der Erfindung ermöglicht es jedoch überdies, die Stützkörper in Verbindung mit der Antriebseinheit und der Steuereinheit neben der bestimmungsgemäßen, in der Regel nur im Falle eines drohenden Umkippens stattfindenden Verwendung, diese auch präventiv, nämlich manuell in eine Position zu verstellen, in der ein Umkippen verhindert wird. Die Mittel zur Verstellung zwischen einer Ver- und Entriegelungsstellung ermöglichen dabei die Festlegung des Stützkörpers in einer beliebigen Position zwischen der Ruheposition und der Stützposition und anschließend die einfache Entriegelung.

Die Verriegelungseinheit kann grundsätzlich mit einer eigenen Antriebseinheit ausgestattet sein, um deren Verstellung zwischen einer Ver- und Entriegelungsstellung zu ermöglichen. Nach einer besonders vorteilhaften Ausgestaltung der Erfindung steht die Verriegelungseinheit jedoch mit der Antriebseinheit in Wirkverbindung. Diese ist dabei derart ausgestaltet, dass die Antriebseinheit zur Verstellung der Verriegelungseinheit genutzt werden kann. Diese Ausgestaltung der Erfindung ermöglicht es somit, auf eine separate Antriebseinheit zur Verstellung der Verriegelungseinheit zu verzichten. Hierdurch lassen sich sowohl Gewichtseinsparungen erzielen sowie die Kosten für eine Kippschutzvorrichtung reduzieren, welche mit einer angetriebenen Verriegelungseinheit versehen ist.

Die Ausgestaltung des Stützkörpers kann grundsätzlich in beliebiger Weise erfolgen, sofern dieser zwischen einer Ruheposition und einer Stützposition verstellt werden kann, in der der Stützkörper mit einem fahrzeugfernen Auflagepunkt eine Abstützung des Kraftfahrzeuges ermöglicht. So kann der Stützkörper grundsätzlich ein- oder mehrteilig ausgebildet sein, was eine gute Anpassung an die Kraftfahrzeuge ermöglicht, mit denen die Kippschutzvorrichtung ausgestattet werden soll. Nach einer besonders vorteilhaften Ausgestaltung der Erfindung ist der Stützkörper teleskopartig und/oder schwenkbar zwischen der Ruheposition und der Stützposition verstellbar angeordnet. Eine Ausgestaltung des Stützkörpers gemäß dieser Weiterbildung der Erfindung zeichnet sich zum einen durch seinen geringen Bauraum sowie zum anderen durch die Möglichkeit einer schnellen Verstellung aus der Ruheposition in Richtung der Stützposition aus. Der Stützkörper kann gemäß dieser Weiterbildung sowohl rein schwenkbar oder rein teleskopartig ausgestaltet sein. Es ist jedoch auch denkbar, einen Stützkörper derart auszugestalten, dass er teilweise teleskopierbar und teilweise schwenkbar gegenüber dem Fahrzeug angeordnet ist. Hierdurch besteht die Möglichkeit, die Anforderungen an die Anordnung der Kippschutzvorrichtung an dem Fahrzeug zu minimieren und somit einen breiten Einsatzort am Kraftfahrzeug zu ermöglichen, nachdem das Bewegungsmuster des Stützkörpers zwischen der Ruheposition und der Stützposition vielfältige Ausgestaltungsmöglichkeiten aufweisen kann.

Die Ausgestaltung des Bereichs des Stützkörpers, welcher in der Stützposition, bzw. in Zwischenlagen zwischen der Ruheposition und der Stützposition mit einem Untergrund in Eingriff gelangt, um somit ein Umkippen des Fahrzeuges durch Abstützen zu verhindern, ist grundsätzlich frei wählbar. Nach einer besonders vorteilhaften Ausgestaltung der Erfindung weist der Stützkörper jedoch an seinem in der Stützposition fahrzeugabgewandten Ende ein Auflageelement auf. Über die Ausgestaltung des Auflageelements kann insbesondere ein Einsinken des fahrzeugabgewandten Endes in einen Untergrund verhindert werden, was unter Umständen dem Kippschutz entgegenwirkt. Überdies kann durch eine gelenkige bspw. kugelgelenkige Lagerung des Auflageelements eine Anpassung an beliebige Geländetopografien erreicht werden.

Besonders vorteilhafterweise ist das Auflageelement durch eine Schiene oder drehbar gelagerte Rolle gebildet. Diese Weiterbildungen der Erfindung ermöglichen es in besonders vorteilhafter Weise, das Fahrzeug auch während einer aktivierten Kippschutzvorrichtung fortzubewegen, da dann die Auflageelemente mit dem Untergrund in Kontakt stehen, auf diesem entlanggleiten bzw. abrollen. Eine Beeinträchtigung des Betriebs des Nutzfahrzeuges wird somit in ergänzender Weise auch bei aktivierter Kippschutzvorrichtung zuverlässig verhindert.

Die Anordnung der Kippschutzvorrichtung an dem Fahrzeug kann grundsätzlich in beliebiger Weise erfolgen. So ist insbesondere die Anordnung des Stützkörpers unmittelbar an einem Fahrzeug bzw. Fahrzeugchassis möglich. Nach einer besonders vorteilhaften Ausgestaltung der Erfindung ist der Stützkörper jedoch zwischen der Ruheposition und der Stützposition verlagerbar an einer mit dem Kraftfahrzeug verbundenen Aufnahmeeinheit angeordnet. Die Aufnahmeeinheit, welche ferner auch zur Anordnung der Antriebseinheit sowie der Steuerungseinheit dienen kann, ermöglicht eine besonders einfache Montage der Kippschutzvorrichtung an dem Fahrzeug. Auf eine separate Anordnung weiterer Aggregate, wie bspw. der Antriebseinheit, kann verzichtet werden. Darüber hinaus bietet die Aufnahmeeinheit eine Schutzfunktion für den Stützkörper, so dass die Zuverlässigkeit der Vorrichtung in ergänzender Weise gesteigert werden kann.

Nach einer weiteren Ausgestaltung der Erfindung sind ferner Mittel zur Erfassung von Personen im Bewegungsbereich des Stützkörpers vorgesehen. Diese Mittel, die bspw. eine optische oder elektronische Erfassung von Personen ermöglichen, verhindern, dass eine Verlagerung des Stützkörpers stattfindet, wenn sich im Verlagerungsbereich Personen befinden, welche durch den Stützkörper verletzt werden können. Diese Ausgestaltung der Erfindung weist somit im Betrieb, insbesondere im Baustellenbetrieb, in dem sich oftmals Personen in unmittelbarer Umgebung des Nutzfahrzeuges befinden, eine hohe Sicherheit auf.

Nachstehend werden Ausführungsbeispiele der Erfindung anhand von Skizzen näher erläutert. In den Zeichnungen zeigen:
- Fig. 1: eine perspektivische Ansicht eines Kraftfahrzeuges mit einer ersten Ausführungsform einer Kippschutzvorrichtung in einer Ruheposition;
- Fig. 2: eine perspektivische Ansicht des Kraftfahrzeugs von Fig. 1 mit einer in einer Stützposition angeordneten Kippschutzvorrichtung;
- Fig. 3: eine perspektivische Ansicht der Kippschutzvorrichtung von Fig. 1 und 2;
- Fig. 4: eine perspektivische Ansicht des Kraftfahrzeuges von Fig. 1 mit einer zweiten Ausführungsform einer Kippschutzvorrichtung in einer Ruheposition;
- Fig. 5: eine perspektivische Ansicht des Kraftfahrzeugs von Fig. 4 mit einer in einer Stützposition angeordneten Kippschutzvorrichtung;
- Fig. 6: eine perspektivische Ansicht eines Kraftfahrzeuges von Fig. 1 mit einer dritten Ausführungsform einer Kippschutzvorrichtung in einer Ruheposition;
- Fig.7: eine perspektivische Ansicht des Kraftfahrzeuges von Fig. 6 mit einer in einer Stützposition angeordneten Kippschutzvorrichtung;
- Fig. 8: eine perspektivische Ansicht des Kraftfahrzeugs von Fig. 1 mit einer vierten Ausführungsform einer Kippschutzvorrichtung in einer Ruheposition;
- Fig. 9: eine perspektivische Ansicht des Kraftfahrzeugs von Fig. 8 mit einer in einer Stützposition angeordneten die Kippschutzvorrichtung;
- Fig. 10: eine perspektivische Ansicht eines Kraftfahrzeugs von Fig. 1 mit einer fünften Ausführungsform einer Kippschutzvorrichtung in einer Ruheposition und
- Fig. 11: eine perspektivische Ansicht des Kraftfahrzeugs von Fig. 10 mit einer in einer Stützposition angeordneten Kippschutzvorrichtung.

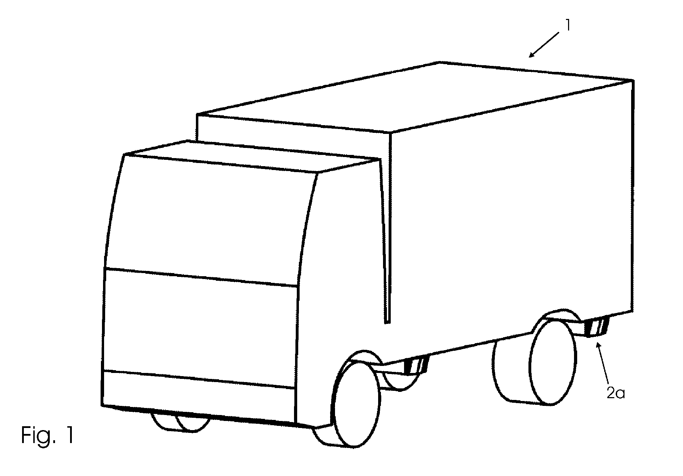

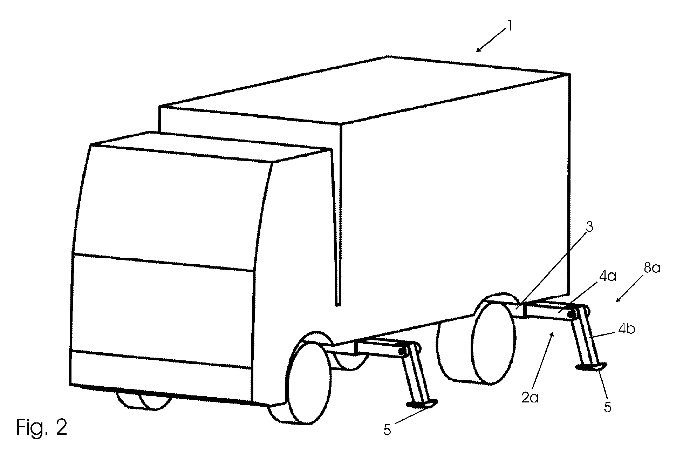

In Fig. 1 und 2 ist skizzenhaft in einer perspektivischen Ansicht ein Kraftfahrzeug 1 mit einer daran angeordneten Kippschutzvorrichtung 8a dargestellt. Ein Stützkörper 2a der Kippschutzvorrichtung 8a ist im Bereich des Chassis angeordnet und befindet sich in der in Fig. 1 dargestellten Position in seiner Ruheposition.

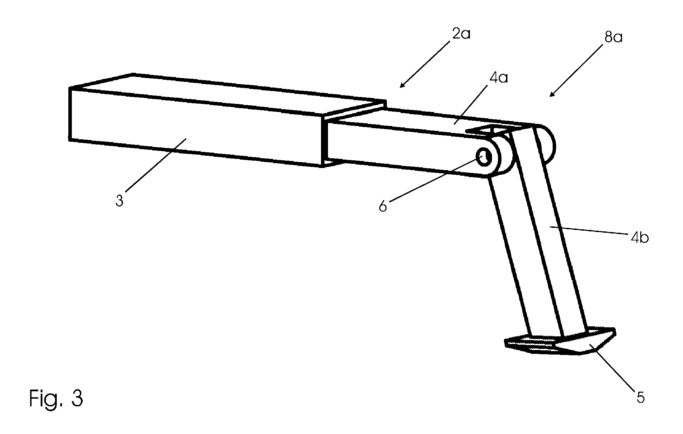

Im Falle einer Aktivierung der Kippschutzvorrichtung 8a über eine hier nicht dargestellte Steuereinheit wird eine ebenfalls nicht dargestellte Antriebseinheit in Gang gesetzt, welche eine Verlagerung des Stützkörpers 2a in die in Fig. 2 dargestellte Stützposition bewirkt. Der Stützkörper 2a weist dabei zwei Stützelemente 4a, 4b auf, welche über einen Gelenkbolzen 6 drehgelenkig miteinander verbunden sind. Zur Verstellung des Stützkörpers 2a werden die Stützelemente 4a, 4b aus einer mit dem Kraftfahrzeug 1 verbundenen Aufnahmeeinheit 3 herausgeschoben, bis diese in die in Fig. 2 dargestellte Stützposition gelangen. An dem dem Kraftfahrzeug 1 gegenüberliegenden Ende des Stützkörpers 2a angeordnete Auflageelemente 5 verhindern im Betrieb eine Eindringen der Enden des Stützkörpers 2a in einen ggfs. weichen Untergrund und gewährleisten somit in besonders zuverlässiger Weise eine Funktion der Kippschutzvorrichtung 8a (vgl. Fig. 3).

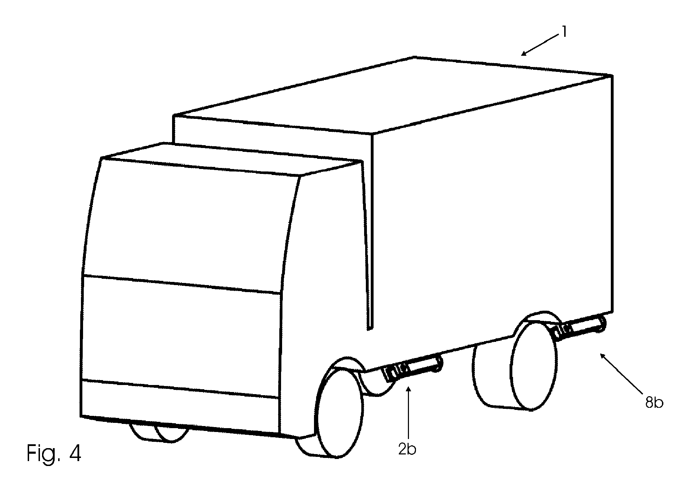

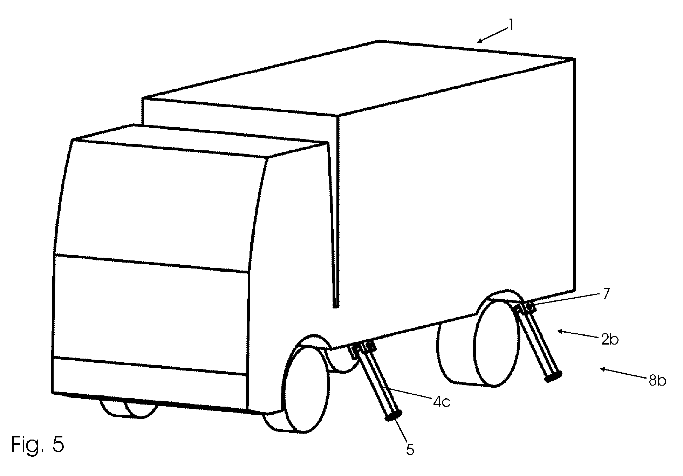

In den Fig. 4 und 5 ist das Kraftfahrzeug 1 mit einer weiteren Kippschutzvorrichtung 8b in einer Ruheposition (Fig. 4) und einer Stützposition (Fig. 5) dargestellt. Abweichend gegenüber der in den Fig. 1 - 3 dargestellten Kippschutzvorrichtung 8a weist die in den Fig. 4 und 5 dargestellte Kippschutzvorrichtung 8b einen Stützkörper 2b auf, welcher durch ein einstückiges Stützelement 4c gebildet ist. Dieses ist einenends an einer Schwenklageraufnahme 7 gelenkig angeordnet, welche am Fahrzeugchassis befestigt ist. Auch in diesem Fall erfolgt eine Verlagerung des Stützelements 4c in die in Fig. 5 dargestellte Position durch die Antriebseinheit nach Aktivierung durch die Steuereinheit, welche mittels Sensoren ein Umkippen des Fahrzeuges 1 erkennt. Nach Beendigung der Stützfunktion, d. h. wenn zu erwarten ist, dass das Umkippen des Fahrzeuges 1 nicht mehr droht, können die Stützkörper 2b, wie in dem zuvor dargestellten Beispiel auch die Stützkörper 2a, mittels der Antriebseinheit wieder in ihre Ruheposition verstellt werden.

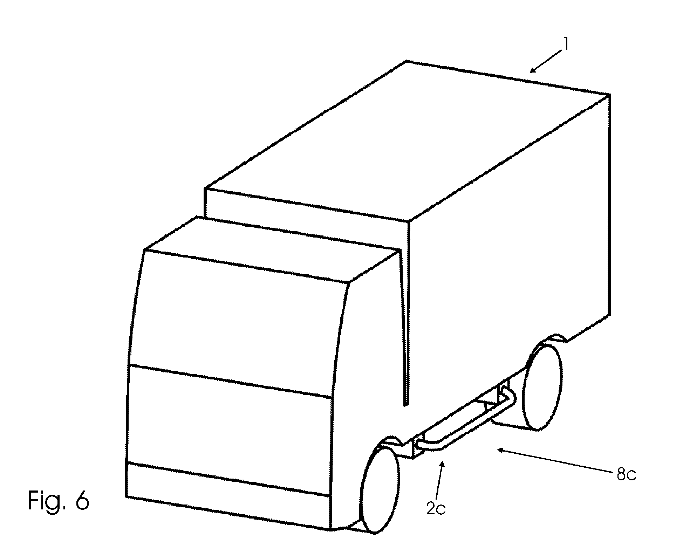

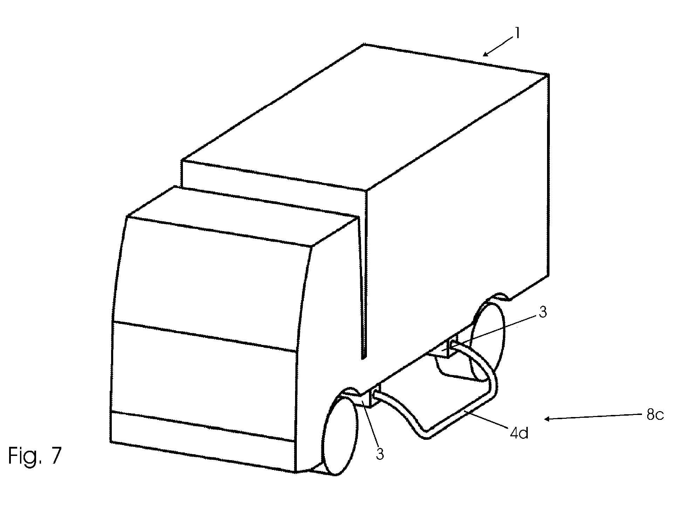

In den Fig. 6 und 7 ist ein weiteres Ausführungsbeispiel einer Kippschutzvorrichtung 8c dargestellt. Abweichend gegenüber den zuvor dargestellten Ausführungsbeispielen weist der Stützkörper 2c ein alternatives Stützelement 4d in Form eines U-förmigen Bügels auf, welcher mit den U-förmigen Schenkeln verlagerbar in Aufnahmeeinheiten 3 angeordnet ist, welche am Fahrzeugchassis befestigt sind. Eine Verlagerung des Stützelements 4d erfolgt analog zu den zuvor dargestellten Ausführungsbeispielen über die Antriebseinheit nach Aktivierung durch die Steuerungseinheit, wobei ebenfalls eine Rückverlagerung über die Antriebseinheit erfolgt, sofern ein Umkippen des Kraftfahrzeuges 1 nicht mehr droht.

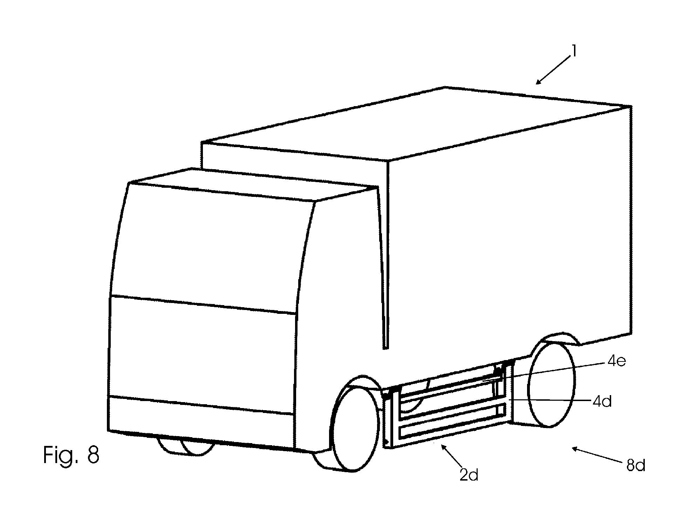

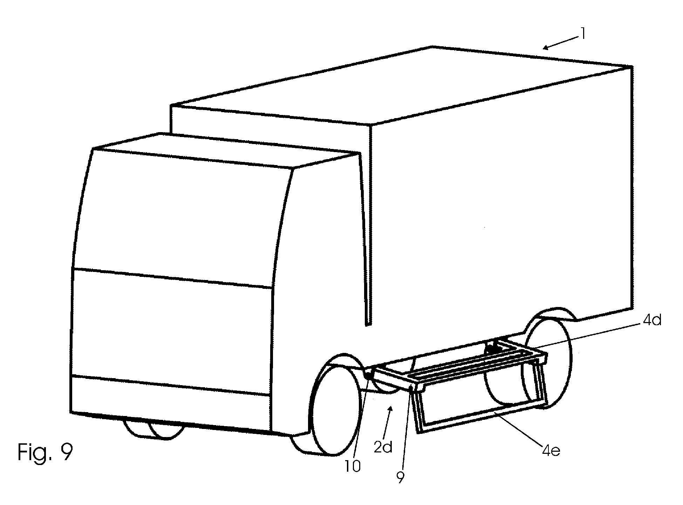

In dem in den Fig. 8 und 9 dargestellten weiteren Ausführungsbeispiel der Kippschutzvorrichtung 8d ist diese zusätzlich als Unterfahrschutz ausgebildet. D. h. in der Ruheposition befindet sich der Stützkörper 2d, bzw. die den Stützkörper 2d bildenden Stützelemente 4e, 4d in der in Fig. 8 dargestellten Position, in der sie ein Unterfahren des Fahrzeugs 1 verhindern. Zur Verstellung des Stützkörpers 2d in die in Fig. 9 dargestellte Stützposition wird das Stützelement 4d gegenüber einer gelenkigen Fahrzeugaufnahme über Gelenkpunkte 10 verschwenkt. Gleichzeitig findet eine Verschwenkung des Stützelements 4e gegenüber dem Stützelement 4d an gemeinsamen Gelenkpunkten 9 statt. Eine Verlagerung sowie Rückverlagerung erfolgt dabei, analog zu den zuvor dargestellten Ausführungsbeispielen, über die Antriebseinheit, bzw. Steuerungseinheit.

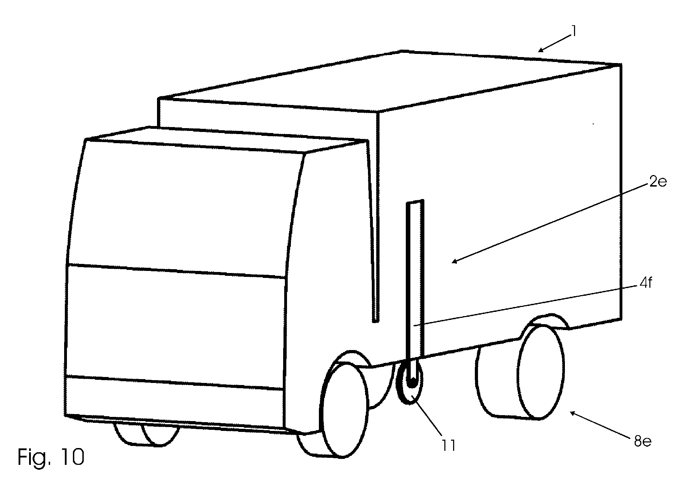

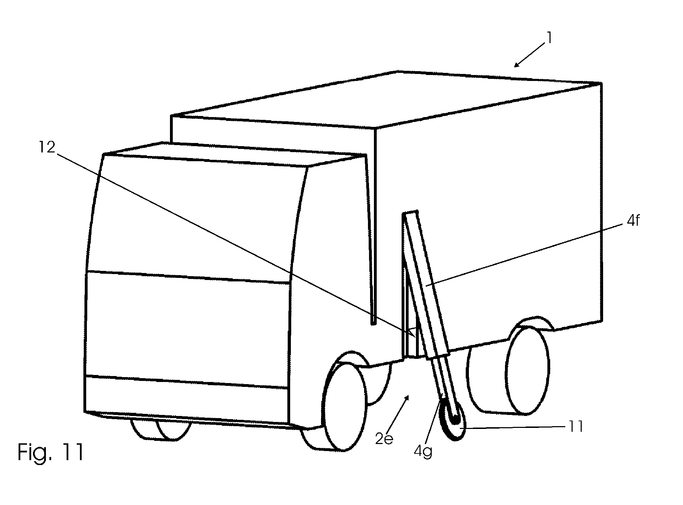

Ein letztes Ausführungsbeispiel einer Kippschutzvorrichtung 8e ist in den Fig. 10 und 11 in einer Ruheposition bzw. Stützposition dargestellt. Im Gegensatz zu den zuvor dargestellten Ausführungsbeispielen weist der Stützkörper 2e ein Stützelement 4f auf, welches in einer Ausnehmung 11 an einer Fahrzeugseite angeordnet ist. Im Falle eines Umkippens erfolgt zum einen ein Herausschwenken des Stützelements 4f aus der Aufnahme 12 sowie eine verlagerung eines Stützelements 4g teleskopartig gegenüber dem Stützelement 4f, so dass der Stützkörper 2e in die in Fig. 11 dargestellte Stützposition gelangt. An seinem dem Stützelement 4f gegenüberliegenden Ende weist das Stützelement 4g eine drehbar gelagerte Rolle 11 auf, die es ermöglicht, eine Abstützung über den Stützkörper 2e auch während einer Fortbewegung des Fahrzeugs 1 zu ermöglichen.

## Patentansprüche

1. Kippschutzvorrichtung für Kraftfahrzeuge, insbesondere Nutzfahrzeuge, mit
- einem mit dem Kraftfahrzeug verbindbaren, zwischen einer zurückgezogenen, fahrzeugnahen Ruheposition und einer ausgestellten, fahrzeugfernen Stützposition verstellbaren Stützkörper und
- einer den Stützkörper zwischen der Ruheposition und der Stützposition verlagernden Antriebseinheit,
**dadurch gekennzeichnet, dass**
die Antriebseinheit mittels einer Steuereinheit kontrollierbar ist, die derart ausgebildet ist, dass im Falle eines drohenden Umkippens des Kraftfahrzeuges (1) eine Verlagerung des Stützkörpers (2a - 2e) in Richtung auf die Stützposition und nach Beendigung des Stützvorgangs eine Rückverlagerung des Stützkörpers (2a - 2e) in die Ruheposition bewirkt wird.

2. Kippschutzvorrichtung nach Anspruch 1, **dadurch gekennzeichnet, dass** die Antriebseinheit durch einen elektromotorischen oder hydraulischen Antrieb gebildet ist.

3. Kippschutzvorrichtung nach Anspruch 1 oder 2, **gekennzeichnet durch** eine mechanische Verriegelungseinheit, die die Position des Stützkörpers (2a - 2e) in der Stützposition sichert.

4. Kippschutzvorrichtung nach einem der vorhergehenden Ansprüche, **dadurch gekennzeichnet, dass** die Verriegelungseinheit zur lösbaren Arretierung des Stützkörpers (2a - 2e) in Zwischenpositionen ausgebildet ist.

5. Kippschutzvorrichtung nach einem der vorhergehenden Ansprüche, **dadurch gekennzeichnet, dass** die Verriegelungseinheit Mittel zur Verstellung zwischen einer Ver- und Entriegelungsstellung aufweist.

6. Kippschutzvorrichtung nach einem der vorhergehenden Ansprüche, **dadurch gekennzeichnet, dass** die Verriegelungseinheit mit der Antriebseinheit in Wirkverbindung steht.

7. Kippschutzvorrichtung nach einem der vorhergehenden Ansprüche, **dadurch gekennzeichnet, dass** der Stützkörper (2a - 2e) teleskopartig und/oder schwenkbar zwischen der Ruheposition und der Stützposition verstellbar angeordnet ist.

8. Kippschutzvorrichtung nach einem der vorhergehenden Ansprüche, **dadurch gekennzeichnet, dass** der Stützkörper (2a - 2e) an seinem in der Stützposition fahrzeugabgewandten Ende ein Auflageelement (5, 11) aufweist.

9. Kippschutzvorrichtung nach einem der vorhergehenden Ansprüche, **dadurch gekennzeichnet, dass** das Auflageelement durch eine Schiene (5) oder drehbar gelagerte Rolle (11) gebildet ist.

10. Kippschutzvorrichtung nach einem der vorhergehenden Ansprüche, **dadurch gekennzeichnet, dass** der Stützkörper (2a - 2e) zwischen der Ruheposition und der Stützposition verlagerbar an einer mit dem Kraftfahrzeug (1) verbundenen Aufnahmeeinheit angeordnet ist.

11. Kippschutzvorrichtung nach einem der vorhergehenden Ansprüche, **dadurch gekennzeichnet, dass** Mittel zur Erfassung von Personen im Bewegungsbereich des Stützkörpers (2a - 2e) vorgesehen sind.
